# EUROPEAN PATENT APPLICATION

(11) **EP 1 802 029 A1**
(43) Date of publication of application: **27.06.2007**
(21) Application number: 05780508.7
(22) Date of filing: 16.08.2005
(51) Int. Cl.: H04L 12/18

(54) **ACCESS POINT, ACCESS POINT CONTROL DEVICE AND WIRELESS LAN SYSTEM**

(30) Priority: 14.10.2004 JP 2004299847
(71) Applicant: MATSUSHITA ELECTRIC INDUSTRIAL CO., LTD., Osaka 571-8501 (JP)
(72) Inventor: SUGIURA, Mikihito Matsushita Electric Indust. Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/014948
(87) International publication number: WO 2006/040875

(57) **Abstract**

The throughput of a network system as a whole is improved in the case where there is a wireless terminal not good in radio wave condition. An AP control device 12 includes a communication portion 27 serving as a unit for transmitting/receiving Ethernet frames, a packet storage portion 25 serving as a unit for storing packets, and a transmission control portion 26 serving as a unit for selecting packets stored in the packet storage portion 25 to transmit the selected packets to the communication portion 27, for deciding whether to store received packets in the packet storage portion 25 or not and for controlling the transmission/reception volume in accordance with the radio wave condition of each of terminals 15, 16 and 19 notified by the APs 13, 17 and 20.

## Description

### Technical Field

The present invention relates to an access point, an access point control device and a wireless LAN system.

### Background Art

In place of a background art method for setting and installing access points (hereinafter referred to as APs) individually, batch processing of AP automatic setting, fault management, statistical information collection, etc. by an AP control device connected to a plurality of APs has been discussed. These discussions have brought advancement of a scheme of standardization among international standardization working groups such as the IETF (Internet Engineering Task Force) and the IEEE 802.11 working group.

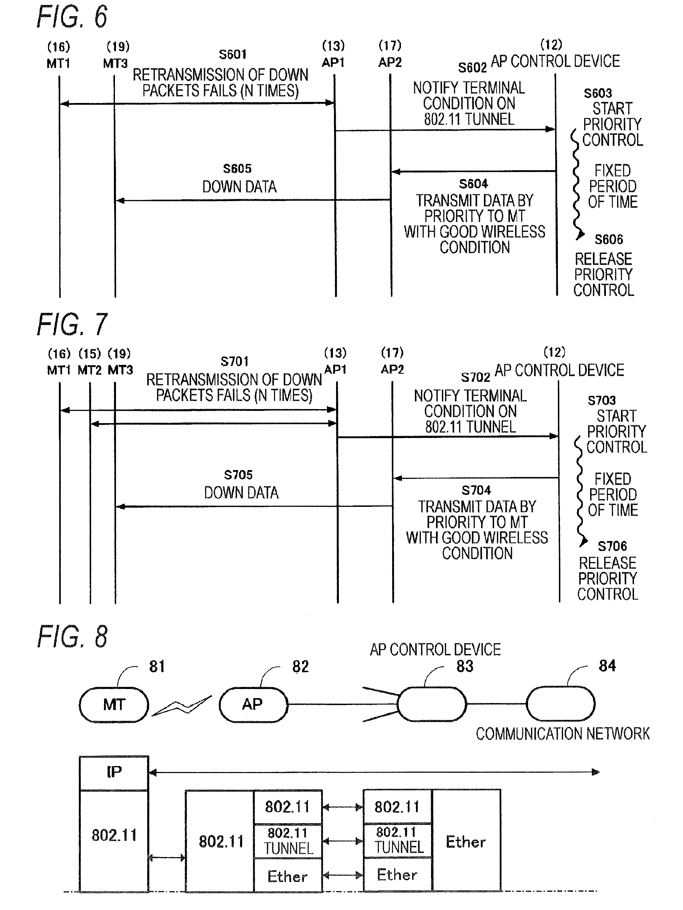

Fig. 8 shows a network system including an AP control device 83 connected to a communication network 84, an AP 82 controlled by the AP control device 83, and an MT terminal 81 performing wireless communication with the AP 82. On this occasion, architecture in which bridge processing between each wireless LAN frame (IEEE 802.11) and each Ethernet frame is performed not by the AP 82 but by the higher-order AP control device 83 and in which the place to open/close an authentication port is shifted from the AP 82 to the AP control device 83 has been discussed.

In such architecture, IETF draft draft-ohara-capwap-lwapp-00.txt [Light Weight Access Point Protocol] "light weight access protocol" (hereinafter referred to as LWAPP) has been proposed by the CAPWAP (Control and Provisioning of Wireless Access Points) working group of the IETF. In the LWAPP, the AP control device 83 performs automatic setting of setting information, fault management, collection of statistical information and setting of encryption key information on the AP 82.

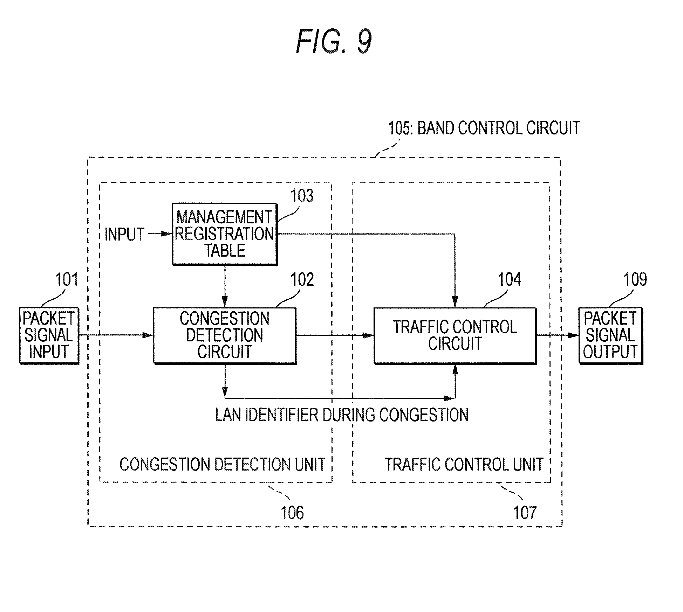

Fig. 9 shows a background-art band control device 105 installed between a backbone network such as the Internet etc. and a plurality of local area networks (LANs) and provided for warranting communication traffic of a plurality of communication terminals connected to the LANs.

This band control device 105 includes a congestion detection unit 106 for detecting the congestion of each of the plurality of LANs by use of an inputted packet signal 101, and a traffic control unit 107 for controlling the traffic volume of packet communication performed through the backbone network by each terminal connected to a LAN under congestion. This band control device 105 is operated only when there is congestion in a wireless LAN circuit, so that one band control device 105 can perform traffic control on a plurality of LANs.

That is, when the band control device 105 accommodating a plurality of LANs detects traffic of a certain LAN exceeding a predetermined threshold, the band control device 105 controls the traffic volume of the certain LAN. According to this method, the traffic volume is detected every LAN, so that the throughput of the system as a whole can be kept high while congestion of each LAN is detected (e.g. see Patent Document 1).
Patent Document 1: Japanese Patent No. 3470680

### Disclosure of the Invention

### Problem that the Invention is to Solve

In the aforementioned background-art band control device 105 and traffic controlling method, it is however conceived that the band is kept for some terminals not good in wireless radio wave condition on the assumption that congestion caused by a certain wireless LAN terminal (hereinafter referred to as terminal simply) is detected to thereby control the traffic volume of the certain wireless LAN in the case where the LANs are wireless LANs provided by the IEEE 802.11.

On the other hand, according to the LWAPP, batch processing of automatic setting of the AP 82, fault management, statistic information collection, etc. can be performed by the AP control device 83. Some wireless section QoS controls such as EDCA (Enhanced Distributed Channel Access), HCCA (HCF Controlled Channel Access) etc. between the AP 82 and the terminal 81 have been discussed by the IEEE 802.11e TGe (task group e).

When there is a terminal not good in radio wave condition, frames are also transmitted to the terminal not good in radio wave condition in the same manner as frames are transmitted to a terminal good in radio wave condition. For this reason, there is a problem that the throughput of the system as a whole is lowered.

Band control and priority control are not provided in the LWAPP proposed by the CAPWAP. For this reason, also in the configuration where congestion occurs in the AP control device 83, packets to be transmitted to a terminal good in radio wave condition are discarded regardless of presence of a terminal not good in radio wave condition. As a result, there is a problem that the throughput of the system as a whole is lowered.

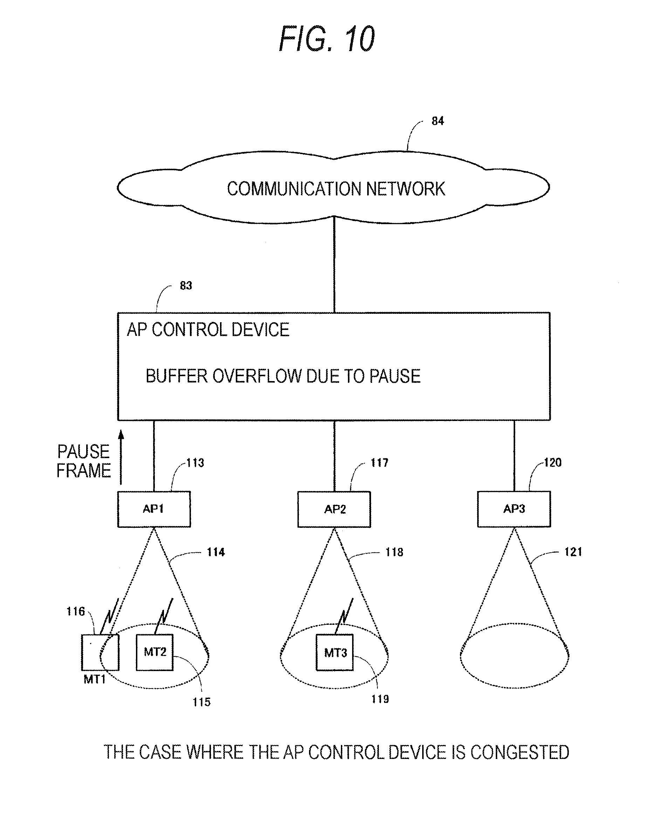

Fig. 10 is a view for explaining the case where there is congestion in the AP control device 83. As shown in Fig. 10, when an AP1 (113) transmits a pause frame as Ethernet flow control to the AP control device 83 because of a buffer overflow, there is a possibility that the AP control device 83 will be congested. When congestion occurs, frames overflowed in the buffer are discarded.

For example, assume that there is a terminal MT1 (116) not good in radio wave condition. In this case, even when the AP control device 83 transmits 100 packets to the terminal MT1 (116), there may be a case where retransmission takes place repetitively between the AP1 (113) and the terminal MT1 (116) to thereby result in discarding of 80 packets. As the number of times of retransmission increases, an empty buffer of the AP1 (113) is decreased, so that the AP1 (113) transmits a pause frame to the AP control device 83. Thus, the AP control device 83 causes congestion and discards frames addressed to the terminal MT2 (115) with a good radio wave condition, as well as frames addressed to the MT1 (16).

On the other hand, also in the configuration where congestion occurs in the AP1 (113), packets addressed to a terminal good in radio wave condition are likewise discarded regardless of presence of a terminal not good in radio wave condition, so that there is a problem that the throughput of the system as a whole is lowered.

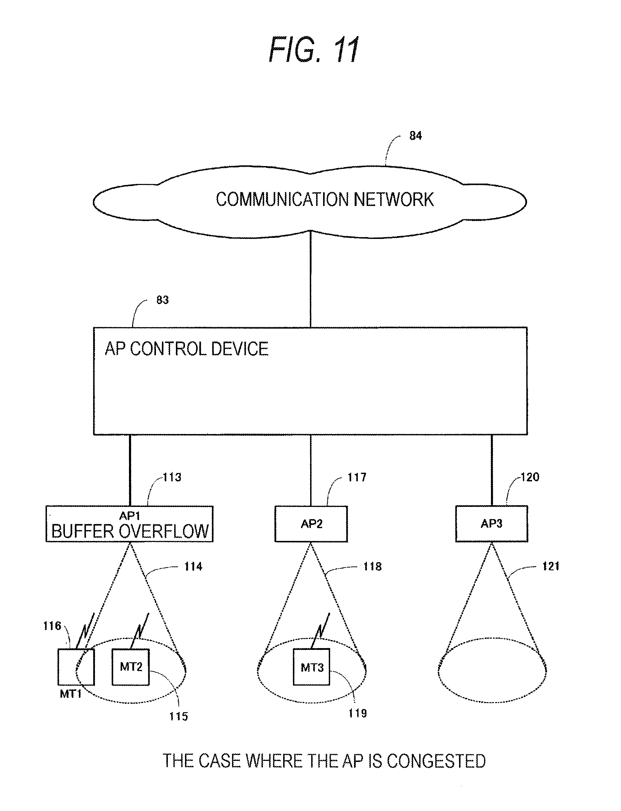

Fig. 11 is a view for explaining the case where there is congestion in the AP1 (113). This case may be conceived as a case where packets are discarded in the AP1 (113) without flow control using a pause frame etc. when a buffer overflow occurs in the AP1 (113). In that case, the same problem as occurred in the AP control device 83 will occur in the AP1 (113).

An object of the invention is to provide an access point, an access point control device and a wireless LAN system which are in a network system including the access point control device connected to a communication network, the access point controlled by the access point control device, and wireless terminals performing wireless communication with the access point and which are improved in the throughput of the network system as a whole in the case where there is a wireless terminal not good in radio wave condition in the network system.

### Means for Solving the Problem

The access point control device according to the invention is an access point control device for connecting access points to a communication network, each access point accommodating terminals, the access point control device including: a communication unit which transmits/receives Ethernet frames to/from the access points and the communication network; a packet storage unit which stores packets transmitted/received by the communication unit; and a transmission control unit which decides whether to store the received packets in the packet storage unit or not and which controls the transmission/reception volume in accordance with the radio wave condition of each of the terminals notified by the access points to select packets stored in the packet storage unit and transmit the selected packets to the communication unit.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The access point according to the invention includes: a wireless communication unit which transmits/receives packets according to the IEEE 802.11 standard to/from a plurality of terminals; a wired communication unit which transmits/receives Ethernet frames to/from an access point control device; a packet storage unit which stores packets in accordance with each terminal; a wireless transmission control unit which selects packets stored in the packet storage unit to transmit the selected packets to the wireless communication unit and which generates information indicating the radio wave condition of each of the terminals when the number of times of retransmission to the terminal is larger than a predetermined threshold; and a radio wave condition notification unit which generates a packet corresponding to the information indicating the radio wave condition of the terminal notified by the wireless transmission control unit and transfers the generated packet to the wired communication unit.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The wireless LAN system according to the invention includes: the aforementioned access point control device; and the aforementioned access points for performing wired communication with the access point control device.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The access point control device according to the invention is an access point control device for connecting access points to a communication network through a layer 2 network, each access point accommodating a plurality of terminals, the access point control device including: a communication unit which transmits/receives Ethernet frames to/from the layer 2 network and the communication network; a packet storage unit which stores packets transmitted/received by the communication unit; and a transmission control unit which decides whether to store the received packets in the packet storage unit or not and which controls the transmission/reception volume in accordance with the radio wave condition of each of the terminals notified by the access points to select packets stored in the packet storage unit and transmit the selected packets to the communication unit.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The access point according to the invention includes: a wireless communication unit which transmits/receives packets according to the IEEE 802.11 standard to/from a plurality of terminals; a wired communication unit which transmits/receives Ethernet frames to/from an access point control device through a layer 2 network; a packet storage unit which stores packets; a wireless transmission control unit which selects packets stored in the packet storage unit to transmit the selected packets to the wireless communication unit and which generates information indicating the radio wave condition of each of the terminals when the number of times of retransmission to the terminal is larger than a predetermined threshold; and a radio wave condition notification unit which generates a packet corresponding to the information indicating the radio wave condition of the terminal notified by the wireless transmission control unit and transfers the generated packet to the wired communication unit.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The wireless LAN system according to the invention includes: the aforementioned access point control device; and the aforementioned access points for performing wired communication with the access point control device through the layer 2 network.

According to the aforementioned configuration, the transmission/reception volume is controlled in accordance with the radio wave condition of each terminal so that even in the case where there is a terminal not good in radio wave condition, communication with a terminal good in radio wave condition can be performed by priority. Thus, the throughput of the network system as a whole can be improved.

The access point control device according to the invention is an access point control device for connecting access points to a communication network through a layer 2 network, each access point accommodating a plurality of terminals, the access point control device including: a communication unit which transmits/receives Ethernet frames to/from the layer 2 network and the communication network; a packet storage unit which stores packets transmitted/received by the communication unit; and a transmission control unit which decides whether to store the received packets in the packet storage unit or not and which controls the transmission/reception volume in accordance with the radio wave condition of each of the access points notified by the access points to select packets stored in the packet storage unit and transmit the selected packets to the communication unit.

According to the aforementioned configuration, the transmission/reception volume is controlled in accordance with the radio wave condition of each access point so that even in the case where there is a terminal not good in radio wave condition, communication with a terminal good in radio wave condition can be performed by priority. Thus, the throughput of the network system as a whole can be improved.

The access point according to the invention includes: a wireless communication unit which transmits/receives packets according to the IEEE 802.11 standard to/from a plurality of terminals; a wired communication unit which transmits/receives Ethernet frames to/from an access point control device through a layer 2 network; a packet storage unit which stores packets; a wireless transmission control unit which selects packets stored in the packet storage unit to transmit the selected packets to the wireless communication unit and which generates information indicating the radio wave condition of the access point when the number of times of retransmission to each of the terminals is larger than a predetermined threshold; and a radio wave condition notification unit which generates a packet corresponding to the information indicating the radio wave condition of the access point notified by the wireless transmission control unit and transfers the generated packet to the wired communication unit.

According to the aforementioned configuration, the transmission/reception volume is controlled in accordance with the radio wave condition of each access point so that even in the case where there is a terminal not good in radio wave condition, communication with a terminal good in radio wave condition can be performed by priority. Thus, the throughput of the network system as a whole can be improved.

The wireless LAN system according to the invention includes: the aforementioned access point control device; and the aforementioned access points for performing wired communication with the access point control device through the layer 2 network.

According to the aforementioned configuration, the transmission/reception volume is controlled in accordance with the radio wave condition of each access point so that even in the case where there is a terminal not good in radio wave condition, communication with a terminal good in radio wave condition can be performed by priority. Thus, the throughput of the network system as a whole can be improved.

### Effect of the invention

According to the invention, the transmission/reception volume is controlled in accordance with the radio wave condition of each terminal or each access point so that even in the case where there is a terminal not good in radio wave condition, communication with a terminal good in radio wave condition can be performed by priority. Thus, the throughput of the network system as a whole can be improved.

Transmission to the terminal good in radio wave condition is performed in place of transmission to the terminal not good in radio wave condition so that the throughput of the network system as a whole can be improved.

### Brief Description of the Drawings

[Fig. 1] A view showing a network system for explaining a first embodiment of the invention.
[Fig. 2] A block diagram showing a schematic configuration of an AP control device in the first embodiment.
[Fig. 3] A block diagram showing a schematic configuration of an AP in the first embodiment.
[Fig. 4] A view showing a sequence in the case where priority control in the first embodiment is performed.
[Fig. 5] A view showing a network system for explaining a second embodiment of the invention.
[Fig. 6] A view showing a sequence in the case where priority control in the second embodiment is performed.
[Fig. 7] A view showing a sequence in the case where priority control in the second embodiment is performed.
[Fig. 8] A view showing a network system according to the background art.
[Fig. 9] A view showing a band control device according to the background art.
[Fig. 10] A view for explaining congestion of an AP control device.
[Fig. 11] A view for explaining congestion of an AP.

### Description of Reference Numerals

- 11, 84: communication network
- 12, 83: AP control device
- 13, 113: AP1
- 15, 115: MT2
- 16, 116: MT1
- 17, 117: AP2
- 19, 119: MT3
- 20, 120: AP3
- 25, 32: packet storage portion
- 26: transmission control portion
- 27: communication portion
- 31: wired communication portion
- 33: wireless transmission control portion
- 34: radio wave condition notification portion
- 35: wireless communication portion
- 101: packet signal input
- 102: congestion detection circuit
- 103: management registration table
- 104: traffic control circuit
- 105: band control circuit
- 106: congestion detection unit
- 107: traffic control unit
- 109: packet signal output

### Best Mode for Carrying Out the Invention

### (Embodiment 1)

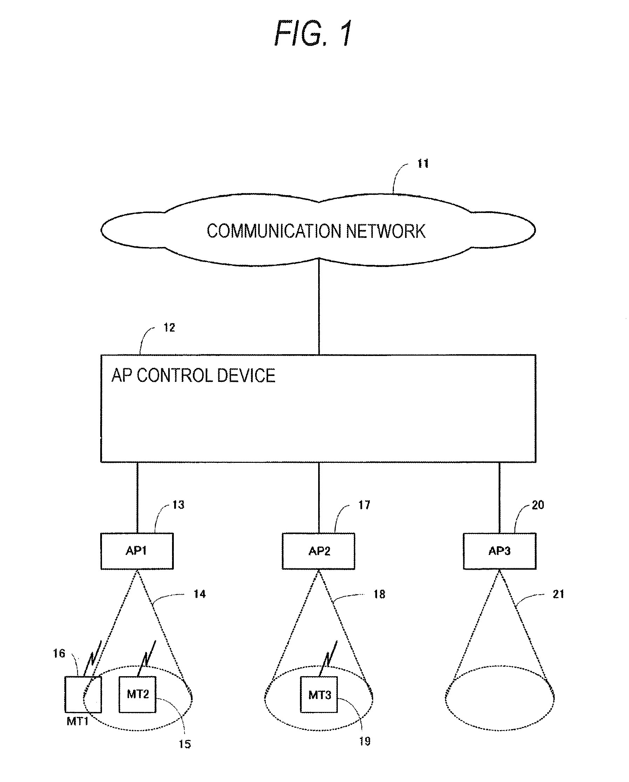

In order to explain a first embodiment of the invention, Fig. 1 shows a network system including an AP control device 12 connected to a communication network 11, APs 13, 17 and 20 controlled by the AP control device 12, and terminal MTs 15, 16 and 19 accommodated in the APs 13 and 17.

In Fig. 1, the APs 13, 17 and 20 and the AP control device 12 are connected to each other physically and directly. However, a similar effect can be obtained also when the APs 13, 17 and 20 and the AP control device 12 are connected to each other through a network. In the case where communication between the APs 13, 17 and 20 and the AP control device 12 is performed in a protocol such as the LWAPP as in the example of the background art, the aforementioned network is a layer 2 network made up of switching hubs or hubs.

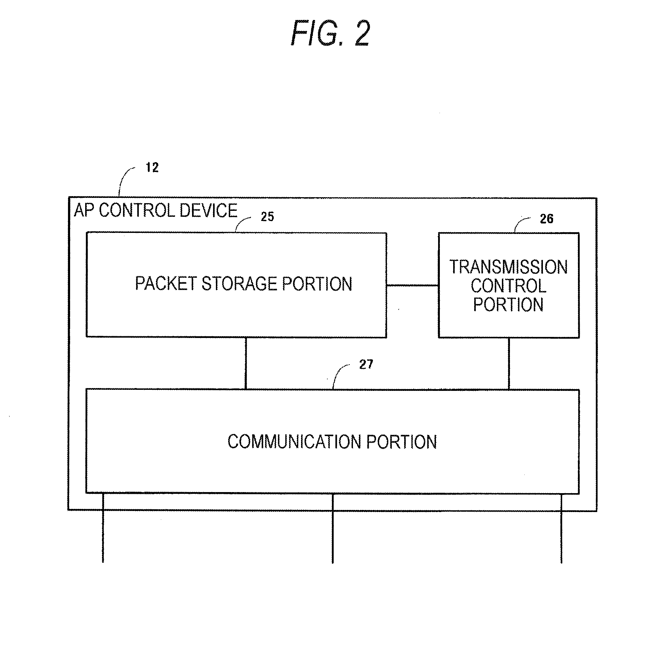

Fig. 2 shows a schematic configuration of the AP control device 12 in this embodiment. The AP control device 12 includes a communication portion 27, a packet storage portion 25, and a transmission control portion 26. The communication portion 27 is a portion which transmits/receives Ethernet frames. The packet storage portion 25 is a portion which stores packets. The transmission control portion 26 is a portion which selects packets stored in the packet storage portion 25 so as to transmit the selected packets to the communication portion 27 and which decides whether to store received packets in the packet storage portion 25 or not. At the same time, the transmission control portion 26 controls the transmission/reception volume in accordance with the radio wave conditions of the terminals 15, 16 and 19 notified by the APs 13, 17 and 20.

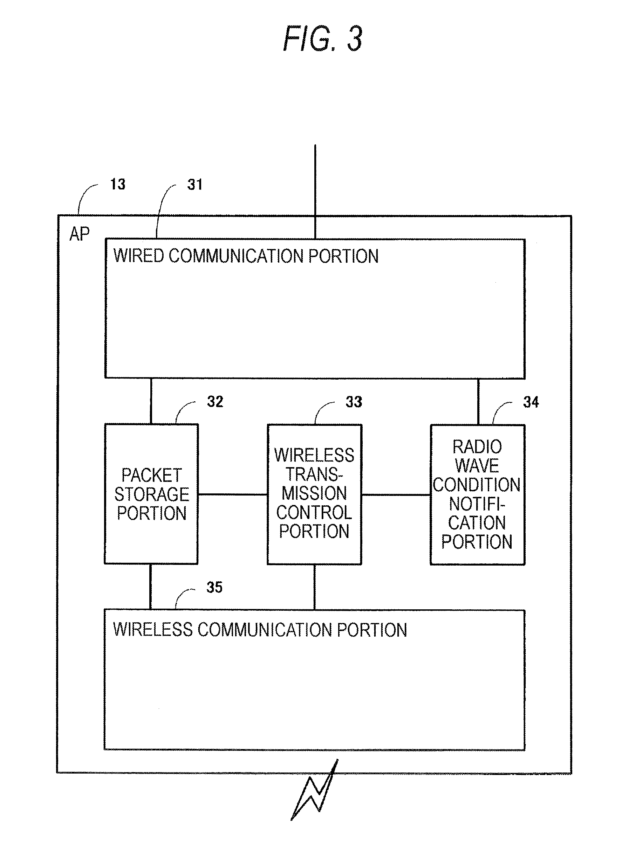

Fig. 3 shows a schematic configuration of the AP 13 (this also applies to the APs 17 and 20) in this embodiment. The AP 13 includes a wireless communication portion 35, a wired communication portion 31, a packet storage portion 32, a wireless transmission control portion 33, and a radio wave condition notification portion 34. The wireless communication portion 35 is a portion which transmits/receives packets conformable to the IEEE 802.11 standard. The wired communication portion 31 is a portion which transmits/receives Ethernet frames. The packet storage portion 32 is a portion which stores packets in accordance with each of the terminals 15, 16 and 19. The wireless transmission control portion 33 is a portion which selects packets stored in the packet storage portion 32 to thereby transmit the selected packets to the wireless communication portion 35. The radio wave condition notification portion 34 is a portion which generates a packet for sending a notification of the radio wave condition of each of the terminals 15, 16 and 19 notified by the wireless transmission control portion 33, and transfers the generated packet to the wired communication portion 31.

In this case, the wireless transmission control portion 33 performs retransmission control when communication is performed in an infrastructure mode and DCF and an ACK of a transmitted down frame cannot be received from a destination terminal. When the number of times of retransmission is larger than a predetermined threshold, the wireless transmission control portion 33 notifies the radio wave condition notification portion 34 of the radio wave condition of the terminal.

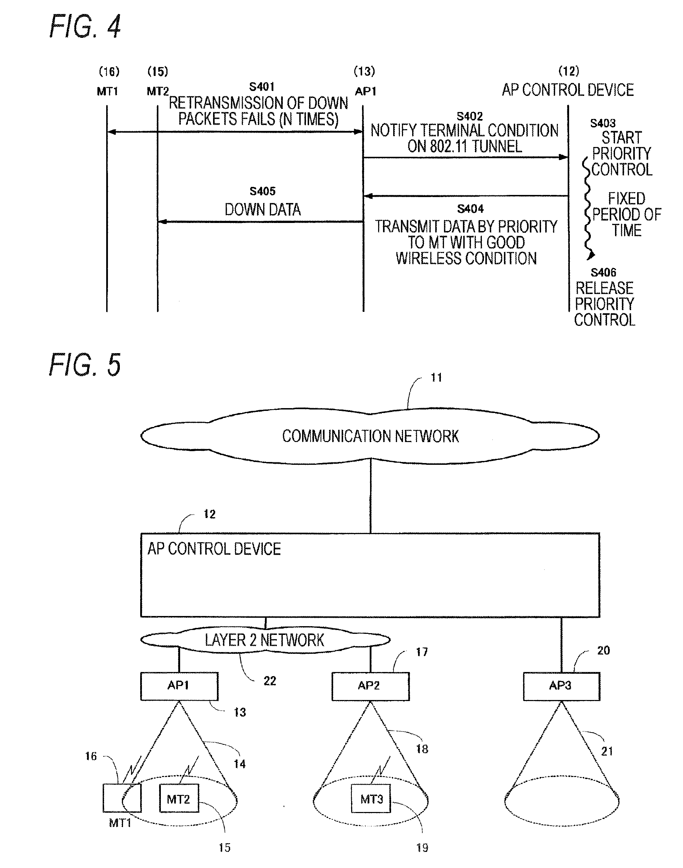

Fig. 4 shows a sequence in the case where the AP control device 12 performs priority control on the AP1 (13) communicating with a plurality of MT1 (16) and MT2 (15) in this embodiment. Specific operation will be described with reference to Fig. 4 and Fig. 1.

(A) Consider a situation that the MT1 (terminal 16) and the MT2 (terminal 15) are performing communication with a not-shown server over the communication network 11 through wireless communication with the AP1 (13), and the MT1 (terminal 16) is receiving streaming service (unicasting UDP) from the server.

(B) In this situation, assume that the MT1 (terminal 16) has moved to a place where the radio wave condition is not good, as shown in Fig. 1.

(C) Although streaming data transmitted by the server are transmitted to the MT1 (terminal 16) through the AP1 (13), the number of times an ACK of the UDP data frames transmitted continuously cannot be sent back increases because the radio wave condition is not good (step S401).

(D) When the number of times of retransmission counted by the wireless transmission control portion 33 of the AP1 (13) is larger than a predetermined number of times (N), the wireless transmission control portion 33 of the AP1 (13) sends a notification to the radio wave condition notification portion 34 (step S402).

(E) The radio wave condition notification portion 34 of the AP1 (13) generates a packet indicating the condition of the MT1 (terminal 16) so as to transmit the generated packet to the wired communication portion 31. On this occasion, the packet may be a packet conformable to a special format between the AP1 (13) and the AP control device 12 as proposed in the CAPWAP.

(F) The wired communication portion 31 transmits the packet generated in the paragraph (E).

(G) The communication portion 27 of the AP control device 12 receives the packet generated in the paragraph (E).

(H) Upon reception of the packet indicating the condition of the MT1 (terminal 16), the communication portion 27 transmits the packet to the transmission control portion 26.

(I) From the received packet, the transmission control portion 26 finds out that the radio wave condition of the MT1 (terminal 16) is not good.

(J) The transmission control portion 26 stores the condition of the MT1 (terminal 16) for a fixed period of time since that time.

(K) In the fixed period of time, the unicasting frames for streaming service forwarded to the MT1 (terminal 16) are discarded (priority control: step S403).

In this manner, according to this embodiment, down frames addressed to the MT2 (terminal 15) performing communication through the AP1 (13) can be transmitted well (steps S405 and S406) without being disturbed by down frames addressed to the MT1 (terminal 16). Thus, the throughput of the system as a whole can be improved, compared with the case where the down frames addressed to the MT1 (terminal 16) are transmitted.

Although the unicasting UDP has been described in the paragraph (A) by way of example, a similar effect can be obtained when TCP frames are used. Since flow control is performed in a TCP layer, it can be conceived that TCP has a smaller effect than UDP frames.

In the case where flow control etc. is performed between the AP1 (13) and the AP control device 12 (buffer overflow is not caused in the AP1 (13)) in the paragraph (K), the same effect can be obtained if discarding is performed only when the queue of the AP control device 12 is congested in a fixed period of time.

In addition, in the case where the packet storage portion 25 of the AP control device 12 is equipped with a mechanism having a queue for each terminal and performing priority control on the queue, a similar effect can be also obtained when transmission priority of packets stored in the queue addressed to the MT1 (terminal 16) is lowered in the fixed period of time.

### (Embodiment 2)

In order to explain a second embodiment of the invention, Fig. 5 shows a network system including an AP control device 12 connected to a communication network 11, APs 13, 17 and 20 including at least a plurality of APs controlled by the AP control device 12 from one physical port of the AP control device 12 through a layer 2 network 22, and terminal MTs 15, 16 and 19 accommodated in the APs 13 and 17.

Fig. 6 shows a sequence in the case where the AP control device 12 performs priority control on the AP1 (13) and the AP2 (17) in accordance with each terminal. The AP1 (13) and the AP2 (17) perform communication with a plurality of terminals MT1 (16) and MT3 (19). Specific operation will be described with reference to Fig. 6 and Fig. 5.

(A) Consider a situation that the MT1 (terminal 16) and the MT3 (terminal 19) are performing communication with a not-shown server over the communication network 11 through wireless communication with the AP1 (13) and wireless communication with the AP2 (17) respectively, and the MT1 (terminal 16) is receiving streaming service (unicasting UDP) from the server.

(B) In this situation, assume that the MT1 (terminal 16) has moved to a place where the radio wave condition is not good, as shown in Fig. 5.

(C) Although streaming data transmitted by the server are transmitted to the MT1 (terminal 16) through the AP1 (13) in this case, the number of times an ACK of the UDP data frames transmitted continuously cannot be sent back increases because the radio wave condition is not good (step S601).

(D) When the number of times of retransmission counted by the wireless transmission control portion 33 of the AP1 (13) is larger than a predetermined number of times (N), the wireless transmission control portion 33 of the AP1 (13) sends a notification to the radio wave condition notification portion 34 (step S602).

(E) The radio wave condition notification portion 34 of the AP1 (13) generates a packet indicating the condition of the MT1 (terminal 16) so as to transmit the generated packet to the wired communication portion 31. On this occasion, the packet may be a packet conformable to a special format between the AP1 (13) and the AP control device 12 as proposed in the CAPWAP.

(F) The wired communication portion 31 transmits the packet generated in the paragraph (E).

(G) The communication portion 27 of the AP control device 12 receives the packet generated in the paragraph (E).

(H) Upon reception of the packet indicating the condition of the MT1 (terminal 16), the communication portion 27 transmits the packet to the transmission control portion 26.

(I) From the received packet, the transmission control portion 26 finds out that the radio wave condition of the MT1 (terminal 16) is not good.

(J) The transmission control portion 26 stores the condition of the MT1 (terminal 16) for a fixed period of time since that time.

(K) In the fixed period of time, the unicasting frames for streaming service forwarded to the MT1 (terminal 16) are discarded (priority control: step S603).

In this manner, according to this embodiment, down frames (steps S605 and S606) addressed to the MT3 (terminal 19) performing communication through the AP2 (17) can be transmitted well without being disturbed by down frames addressed to the MT1 (terminal 16). Thus, the throughput of the system as a whole can be improved, compared with the case where the down frames addressed to the MT1 (terminal 16) are transmitted.

Although the unicasting UDP has been described in the paragraph (A) by way of example, a similar effect can be obtained when TCP frames are used. Since flow control is performed in a TCP layer, it can be conceived that TCP has a smaller effect than UDP frames.

When flow control etc. is performed between the AP1 (13) and the AP control device 12 in the paragraph (K), the same effect can be obtained if discarding is performed only when the queue of the AP control device 12 is congested in a fixed period of time.

In addition, in the case where the packet storage portion 25 of the AP control device 12 is equipped with a mechanism having a queue for each terminal and performing priority control on the queue, a similar effect can be also obtained when transmission priority of packets stored in the queue addressed to the MT1 (terminal 16) is lowered in the fixed period of time.

### (Embodiment 3)

Next, Embodiment 3 will be described. The system configuration of Embodiment 3 is the same as that of Embodiment 2 shown in Fig. 5. That is, the system configuration of Embodiment 3 is a network system including an AP control device 12 connected to a communication network 11, APs 13, 17 and 20 including at least a plurality of APs controlled by the AP control device 12 from one physical port of the AP control device 12 through a layer 2 network 22, and terminal MTs 15, 16 and 19 performing communication with the APs 13 and 17.

In this embodiment, as shown in Fig. 2, the AP control device 12 includes a communication portion 27, a packet storage portion 25, and a transmission control portion 26. The communication portion 27 is a portion which transmits/receives Ethernet frames. The packet storage portion 25 is a portion which stores packets. The transmission control portion 26 is a portion which selects packets stored in the packet storage portion 25 so as to transmit the selected packets to the communication portion 27 and which decides whether to store received packets in the packet storage portion 25 or not. At the same time, the transmission control portion 26 controls the transmission/reception volume in accordance with the radio wave conditions of the APs 13, 17 and 20 notified by the APs 13, 17 and 20.

In this embodiment, as shown in Fig. 3, the AP 13 (this also applies to the APs 17 and 20) includes a wireless communication portion 35, a wired communication portion 31, a packet storage portion 32, a wireless transmission control portion 33, and a radio wave condition notification portion 34. The wireless communication portion 35 is a portion which transmits/receives packets conformable to the IEEE 802.11 standard. The wired communication portion 31 is a portion which transmits/receives Ethernet frames. The packet storage portion 32 is a portion which stores packets in accordance with each terminal. The wireless transmission control portion 33 is a portion which selects packets stored in the packet storage portion 32 to thereby transmit the selected packets to the wireless communication portion 35. The radio wave condition notification portion 34 is a portion which generates a packet for sending a notification of the radio wave condition of the AP 13 notified by the wireless transmission control portion 33, and transfers the generated packet to the wired communication portion 31.

In this case, the wireless transmission control portion 33 performs retransmission control when communication is performed in an infrastructure mode and DCF and an ACK of a transmitted down frame cannot be received from a destination terminal. When the number of times of retransmission is larger than a predetermined threshold, the wireless transmission control portion 33 notifies the radio wave condition notification portion 34 of the radio wave condition of the AP 13.

Fig. 7 shows a sequence in the case where the AP control device 12 performs priority control on the AP1 (13) and the AP2 (17) in accordance with each AP. The AP1 (13) and the AP2 (17) perform communication with a plurality of terminals MT1 (16), MT2 (15) and MT3 (19). Specific operation will be described with reference to Fig. 7 and Fig. 5.

(A) Consider a situation that the MT1 (terminal 16) and the MT2 (terminal 15) are performing communication with a not-shown server over the communication network 11 through wireless communication with the AP1 (13), the MT3 (terminal 19) is performing communication with the not-shown server over the communication network 11 through wireless communication with the AP2 (17), and the MT1 (terminal 16) is receiving streaming service (unicasting UDP) from the server.

(B) In this situation, assume that the MT1 (terminal 16) has moved to a place where the radio wave condition is not good, as shown in Fig. 5.

(C) Although streaming data transmitted by the server are transmitted to the MT1 (terminal 16) through the AP1 (13) in this case, the number of times an ACK of the UDP data frames transmitted continuously cannot be sent back increases because the radio wave condition is not good (step S701).

(D) When the number of times of retransmission counted not in accordance with each terminal but in accordance with each AP by the wireless transmission control portion 33 of the AP1 (13) is larger than a predetermined number of times (N), the wireless transmission control portion 33 of the AP1 (13) sends a notification to the radio wave condition notification portion 34 (step S702).

(E) The radio wave condition notification portion 34 of the AP1 (13) generates a packet indicating the condition of the AP1 (13) so as to transmit the generated packet to the wired communication portion 31. On this occasion, the packet may be a packet conformable to a special format between the AP1 (13) and the AP control device 12 as proposed in the CAPWAP.

(F) The wired communication portion 31 transmits the packet generated in the paragraph (E).

(G) The communication portion 27 of the AP control device 12 receives the packet generated in the paragraph (E).

(H) Upon reception of the packet indicating the condition of the AP1 (13), the communication portion 27 transmits the packet to the transmission control portion 26.

(I) From the received packet, the transmission control portion 26 finds out that the radio wave condition of the AP1 (13) is not good.

(J) The transmission control portion 26 stores the condition of the AP1 (13) for a fixed period of time since that time.

(K) In the fixed period of time, the unicasting frames for streaming service forwarded to the AP1 (13) are discarded (priority control: step S703).

In this manner, according to this embodiment, down frames addressed to the MT3 (terminal 19) performing communication through the AP2 (17) can be transmitted well without being disturbed by down frames addressed to the AP1 (13). Thus, the throughput of the system as a whole can be improved, compared with the case where the down frames addressed to the AP1 (16) are transmitted.

Although the paragraphs (C) and (D) have given description to the case where the communication condition of the MT1 (terminal 16) is deteriorated, the radio wave condition of the AP1 (13) as a whole is managed not in accordance with the number of times of retransmission to each terminal from the AP1 (13) but in accordance with the total number of times of retransmission to the MT1 (terminal 16) and the MT2 (terminal 15) from the AP1 (13).

In addition, in the case where the packet storage portion 25 of the AP control device 12 is equipped with a mechanism having a queue for each AP and performing priority control on the queue in the paragraph (K), a similar effect can be also obtained when transmission priority of packets stored in the queue addressed to the AP1 (13) is lowered in the fixed period of time. Industrial Applicability

By use of the access point, the access point control device and the wireless LAN system according to the invention, the transmission/reception volume is controlled in accordance with the radio wave condition of each terminal or each access point. Thus, even when there is a terminal not good in radio wave condition, communication with a terminal good in radio wave condition can be performed by priority so that there is an effect that the throughput of the network system as a whole can be improved. Thus, the access point, the access point control device and the wireless LAN system according to the invention are useful as a network throughput improving technique.

## Claims

1. An access point control device for connecting access points to a communication network, each of the access points accommodating terminals, the access point control device, comprising:
a communication unit that transmits/receives Ethernet frames to/from the access points and the communication network;
a packet storage unit that stores packets transmitted/received by the communication unit; and
a transmission control unit that decides whether to store the received packets in the packet storage unit or not and that controls a transmission/reception volume in accordance with a radio wave condition of each of terminals notified by the access points to select the packets stored in the packet storage unit and transmit the selected packets to the communication unit.

2. An access point, comprising:
a wireless communication unit that transmits/receives packets according to the IEEE 802.11 standard to/from a plurality of terminals;
a wired communication unit that transmits/receives Ethernet frames to/from an access point control device;
a packet storage unit that stores packets in accordance with each terminal;
a wireless transmission control unit that selects packets stored in the packet storage unit to transmit the selected packets to the wireless communication unit and that generates information indicating a radio wave condition of each of the terminals when the number of times of retransmission to the terminal is greater than a predetermined threshold; and
a radio wave condition notification unit that generates a packet corresponding to the information indicating the radio wave condition of the terminal notified by the wireless transmission control unit and transfers the generated packet to the wired communication unit.

3. A wireless LAN system, comprising:
an access point control device according to Claim 1; and
an access point according to Claim 2 for performing a wired communication with the access point control device.

4. An access point control device for connecting access points to a communication network through a layer 2 network, each of the access points accommodating a plurality of terminals, the access point control device comprising:
a communication unit that transmits/receives Ethernet frames to/from the layer 2 network and the communication network;
a packet storage unit that stores packets transmitted/received by the communication unit; and
a transmission control unit that decides whether to store the received packets in the packet storage unit or not, and that controls a transmission/reception volume in accordance with a radio wave condition of each of terminals notified by the access points to select packets stored in the packet storage unit, and that transmits the selected packets to the communication unit.

5. An access point, comprising:
a wireless communication unit that transmits/receives packets according to the IEEE 802.11 standard to/from a plurality of terminals;
a wired communication unit that transmits/receives Ethernet frames to/from an access point control device through a layer 2 network;
a packet storage unit that stores packets;
a wireless transmission control unit that selects packets stored in the packet storage unit to transmit the selected packets to the wireless communication unit and that generates information indicating a radio wave condition of each of the terminals when the number of times of retransmission to the terminal is greater than a predetermined threshold; and
a radio wave condition notification unit that generates a packet corresponding to the information indicating the radio wave condition of the terminal notified by the wireless transmission control unit and transfers the generated packet to the wired communication unit.

6. A wireless LAN system, comprising:
an access point control device according to Claim 4; and
an access point according to Claim 5 for performing a wired communication with the access point control device through the layer 2 network.

7. An access point control device for connecting access points to a communication network through a layer 2 network, each of the access points accommodating a plurality of terminals, the access point control device comprising:
a communication unit that transmits/receives Ethernet frames to/from the layer 2 network and the communication network;
a packet storage unit that stores packets transmitted/received by the communication unit; and
a transmission control unit that decides whether to store the received packets in the packet storage unit or not, and that controls a transmission/reception volume in accordance with a radio wave condition of each of the access points notified by the access points to select packets stored in the packet storage unit, and that transmits the selected packets to the communication unit.

8. An access point comprising:
a wireless communication unit that transmits/receives packets according to the IEEE 802.11 standard to/from a plurality of terminals;
a wired communication unit that transmits/receives Ethernet frames to/from an access point control device through a layer 2 network;
a packet storage unit that stores packets;
a wireless transmission control unit that selects packets stored in the packet storage unit to transmit the selected packets to the wireless communication unit, and that generates information indicating a radio wave condition of the access point when the number of times of retransmission to each of the terminals is greater than a predetermined threshold; and
a radio wave condition notification unit that generates a packet corresponding to the information indicating the radio wave condition of the access point notified by the wireless transmission control unit and transfers the generated packet to the wired communication unit.

9. A wireless LAN system comprising:
an access point control device according to Claim 7; and
an access point according to Claim 8 for performing a wired communication with the access point control device through the layer 2 network.
